# EUROPÄISCHE PATENTSCHRIFT

(11) **EP 2 447 097 B1**
(45) Veröffentlichungstag und Bekanntmachung des Hinweises auf die Patenterteilung: **25.09.2019**
(21) Anmeldenummer: 11186998.8
(22) Anmeldetag: 27.10.2011
(51) Int. Cl.: B60H 1/00, B60H 1/32, F25B 39/04, F28F 9/02, F28F 9/26, F28D 1/053

(54) **Kraftfahrzeugklimaanlage**
Motor vehicle air conditioner
Climatiseur de véhicule à moteur

(30) Priorität: 27.10.2010 DE 102010043000
(43) Veröffentlichungstag der Anmeldung: 02.05.2012
(73) Patentinhaber: MAHLE Behr GmbH & Co. KG, 70469 Stuttgart (DE)
(72) Erfinder: Förster, Uwe, 71729 Erdmannhausen (DE)
(74) Vertreter: Grauel, Andreas

(56) Entgegenhaltungen:
- EP-A1- 0 633 435
- EP-A1- 2 090 851
- DE-A1-102006 011 327
- DE-A1-102008 055 624
- US-A1- 2003 188 857
- MATSUOKA T ET AL: "AN AIR-CONDITIONING SYSTEM FOR ELECTRIC VEHICLES AND ITS TEMPERATURE CONTROL CHARACTERISTICS", EVS - 13. 13TH. INTERNATIONAL ELECTRIC VEHICLE SYMPOSIUM. OSAKA, OCT. 13 - 16, 1996. SESSIONS 5A - 6H + POSTER/DIALOGUE SESSION; [EVS. INTERNATIONAL ELECTRIC VEHICLE SYMPOSIUM], TOKYO, JEVA, JP, vol. SYMP. 13, 13 October 1996 (1996-10-13), pages 239-244, XP000688957,

## Beschreibung

Die vorliegende Erfindung betrifft eine Kraftfahrzeugklimaanlage gemäß dem Oberbegriff des Anspruches 1.

In der Kraftfahrzeugtechnik werden im zunehmenden Maße Kraftfahrzeuge entwickelt und gebaut, welche mit einem Elektromotor ausschließlich angetrieben oder als Hybridfahrzeuge sowohl von einem Elektromotor als auch einem Verbrennungsmotor bewegt werden. Der Elektromotor wird dabei mit elektrischer Energie aus Batterien in dem Kraftfahrzeug versorgt. Beim Fahren mit dem Kraftfahrzeug mit Hilfe des Elektromotors entsteht keine Abwärme im ausreichenden Umfang, so dass dadurch mit elektrischer Energie aus den Batterien der Fahrzeuginnenraum zu beheizen ist. Bei einer Verwendung von elektrischen Heizeinrichtungen zum Erwärmen der dem Fahrzeuginnenraum zuzuführenden Luft werden große Mengen an elektrischer Energie nur zum Erwärmen der Luft im Fahrzeuginnenraum benötigt, so dass dadurch die Reichweite des Kraftfahrzeuges mit elektrischer Energie aus den Batterien stark reduziert ist.

Aus diesem Grund wird bei Kraftfahrzeugklimaanlagen der Kältekreis nicht nur zum Kühlen der dem Fahrzeuginnenraum zuzuführenden Luft, sondern im Wärmepumpenbetrieb auch zum Erwärmen der dem Fahrzeuginnenraum zuzuführenden Luft eingesetzt, um weniger elektrische Energie zum Beheizen des Fahrzeuginnenraumes als mit einer elektrischen Heizeinrichtung zu benötigen. Mit Hilfe eines Kältemittelverdampfers wird der Umgebungsluft des Kraftfahrzeuges Wärme entzogen und diese Wärme mit Hilfe eines Kältemittelkondensators die dem Fahrzeuginnenraum zuzuführenden Luft erwärmt. Der Kältemittelkondensator als Teil des Kältekreises der Kraftfahrzeugklimaanlage im Wärmepumpenbetrieb ist somit innerhalb eines Gehäuses der Kraftfahrzeugklimaanlage in einem Luftkanal angeordnet. Durch den Kältemittelkondensator wird die zu erwärmende Luft geleitet und dadurch die dem Fahrzeuginnenraum zuzuführende Luft erwärmt. Die aus dem Stand der Technik bekannten Kältemittelkondensatoren sind in nachteiliger Weise in der Herstellung aufwendig und teuer und ferner weist die aus den Kältemittelkondensatoren austretende Luft eine inhomogene Temperaturverteilung, d.h. eine Strähnigkeit, auf.

Die Kältemittelkondensatoren weisen eine Vielzahl von im Wesentlichen parallel zueinander ausgerichteten Kühlrohren auf. Dabei sind die Kühlrohre in Reihe geschaltet, d. h. dass das Kältemittel nacheinander die Kühlrohre durchströmt. Ferner können Kältemittelkondensatoren zweireihig ausgebildet sein, d. h. dass in der Strömungsrichtung der Luft durch den Kältemittelkondensator zwei Kühlrohre in Strömungsrichtung der Luft hintereinander angeordnet sind. Dadurch sind die aus dem Stand der Technik bekannten Kältemittelkondensatoren in der Herstellung aufwendig und teuer und aufgrund der hydraulischen bzw. fluidleitenden Schaltung der Kühlrohre in Reihe tritt eine sehr ungleichmäßige Temperaturverteilung innerhalb des Kältemittelkondensators auf, so dass dadurch auch die aus dem Kältemittelkondensator austretende Luft sehr inhomogen aus dem Kältemittelkondensator austritt. Das Gehäuse der Kraftfahrzeugklimaanlage weist verschiedene Luftaustrittsöffnungen auf, so dass die Luft mit unterschiedlichen Temperaturen aus den Luftaustrittsöffnungen austritt.

Aus der US 6 827 139 B2 ist ein Wärmeübertrager als Kältemittelverdampfer bekannt. Eine Vielzahl von Kühlrohren sind im Wesentlichen parallel zueinander ausgerichtet und zwischen den Kühlrohren sind Wellrippen angeordnet.

Die DE 10 2008 055 624 A1 zeigt einen Wärmeübertrager mit mindestens zwei Reihen von Strömungskanälen, die von einem flüssigen Medium durchströmbar sind, und mit zwischen dem Strömungskanälen angeordneten, von Luft überströmbaren Sekundärflächen, wobei das flüssige Medium und die Luft im Kreuzgegenstrom geführt und die erste Reihe auf der Luftaustrittsseite und die zweite Reihe auf der Lufteintrittsseite angeordnet sind, wobei das flüssige Medium in einen ersten Bereich der ersten Reihe eintritt, innerhalb der ersten Reihe in einen zweiten Bereich und aus dem zweiten Bereich der ersten Reihe in die zweite Reihe umgelenkt wird.

Die US 2003/0188857 A1 zeigt eine gattungsgemäße Kraftfahrzeugklimaanlage.

Die Aufgabe der vorliegenden Erfindung besteht deshalb darin, eine Kraftfahrzeugklimaanlage zur Verfügung zu stellen, bei der ein Kältemittelkondensator als Teil eines Kältekreises im Wärmepumpenbetrieb zum Erwärmen der dem Fahrzeuginnenraum zuzuleitenden Luft in der Herstellung einfach und preiswert ist.

Diese Aufgabe wird gelöst mit einer Kraftfahrzeugklimaanlage, umfassend ein Gehäuse, wenigstens einen Luftkanal zum Durchleiten von Luft, ein Gebläse, einen Wärmeübertrager als Kältemittelkondensator als Teil eines Kältekreises im Wärmepumpenbetrieb zur Erwärmung der dem Fahrzeuginnenraum zuzuleitenden Luft, der Kältemittelkondensator umfassend, Kühlrohre zum Durchleiten eines Kältemittels, zwei Sammelrohre zum Fluidverbinden der Kühlrohre, wobei der Kältemittelkondensator als ein einreihiger Kältemittelkondensator ausgebildet ist, wobei bei den nebeneinander angeordneten Kühlrohren abwechselnd zwei Kühlrohre in einer ersten Richtung und zwei Kühlrohre in einer zweiten Richtung durchströmbar sind, wobei die erste Richtung zu der zweiten Richtung entgegengesetzt ist. Der Kältemittelkondensator wird von zu erwärmender Luft durchströmt und in Richtung der Luft, welche den Kältemittelkondensator durchströmt, ist nur ein Kühlrohr vorhanden, so dass es sich um einen einreihigen Kältemittelkondensator handelt. Bei einem zweireihigen Kältemittelkondensator sind in Richtung der Luft, welche den Kältemittelkondensator durchströmt, zwei Kühlrohre hintereinander angeordnet. Vorzugsweise ist dabei die Strömungsrichtung der Luft im Wesentlichen senkrecht zu einer Achse der Kühlrohre oder zu einer von dem Kältemittelkondensator aufgespannten Ebene. Dadurch ist der Kältemittelkondensator in vorteilhafter Weise in der Herstellung besonders einfach und preiswert.

Insbesondere sind wenigstens zwei, drei oder fünf Kühlrohre fluidleitend parallel von Kältemittel durchströmt und/oder wenigstens zwei, drei oder fünf Kühlrohre fluidleitend parallel für Kältemittel geschalten. Im Kältemittelkondensator sind somit mehrere Kühlrohre parallel durchströmt, d. h. dass z. B. von einem Eintrittsrohr mehrere Kühlrohre mit Kältemittel unmittelbar beaufschlagt oder durchströmt werden. Dadurch weist der Kältemittelkondensator in vorteilhafter Weise eine homogene Temperaturverteilung und/oder eine optimierte Temperaturverteilung auf und die aus dem Wärmeübertrager austretende Luft weist ebenfalls eine homogene und/oder optimierte Temperaturverteilung auf. Das Gehäuse der Kraftfahrzeugklimaanlage ist mit mehreren Luftauslassöffnungen versehen. Durch die Luftauslassöffnungen strömt die Luft in verschiedene Bereiche des Fahrzeuginnenraumes, z. B. zum Defrosten der Windschutzscheibe, in den Bereich der Armaturentafel oder in den Fußbereich. Aufgrund der homogenen aus dem Kältemittelkondensator austretenden Temperaturverteilung der Luft strömt auch durch diese Luftauslassöffnungen am Gehäuse der Kraftfahrzeugklimaanlage Luft mit einer im Wesentlichen gleichen oder konstanten Temperatur aus.

In einer zusätzlichen Ausgestaltung weist das Gehäuse der Kraftfahrzeugklimaanlage eine Lufteinlassöffnung zum Ansaugen von Luft aus der Umgebung des Kraftfahrzeuges und eine Lufteinlassöffnung zum Ansaugen der Luft aus dem Fahrzeuginnenraum im Umluftbetrieb auf.

In einer weiteren Ausgestaltung sind wenigstens 30%, 40% oder 50% der Kühlrohre fluidleitend parallel von Kältemittel durchströmt und/oder wenigstens 30%, 40% oder 50% der Kühlrohre sind fluidleitend parallel für Kältemittel geschaltet. Es ist somit eine größere Anzahl der Kühlrohre parallel mit dem Kältemittel beaufschlagt, so dass dadurch eine im Wesentlichen konstante Temperaturverteilung an dem Kältemittelkondensator und damit der aus dem Kältemittelkondensator austretenden Luft erreicht werden kann.

In einer ergänzenden Ausgestaltung sind die Kühlrohre im Wesentlichen geometrisch parallel zueinander ausgerichtet. Im Wesentlichen geometrisch parallel zueinander ausgerichtet bedeutet, dass die Kühlrohre oder eine Achse der Kühlrohre mit einer Abweichung von weniger als 20°, 10°, 5°, 2° oder 1° parallel ausgerichtet und/oder in einer Ebene angeordnet sind.

In einer Variante umfasst der Kältemittelkondensator Umlenkkammern zum Leiten des Kältemittels von einem Kühlrohr in ein anderes Kühlrohr und/oder der Kältemittelkondensator umfasst Eintrittskammern zum Einleiten des Kältemittels von einem Sammelrohr als Eintrittsrohr in wenigstens ein Kühlrohr oder wenigstens zwei Kühlrohre und/oder der Kältemittelkondensator umfasst Austrittskammern zum Ausleiten des Kältemittels in ein Sammelrohr als Austrittsrohr aus wenigstens einem Kühlrohr oder wenigstens zwei Kühlrohren. Die Umlenkkammern, Eintrittskammern und Austrittskammern sind dabei beispielsweise zwischen einem Bodenblech und einem Deckelblech ausgebildet. An dem Bodenblech und/oder an dem Deckelblech sind dabei Vertiefungen, beispielsweise mit Tiefziehen, eingearbeitet. An den Eintrittskammern, Umlenkkammer oder Austrittskammern sind ferner Öffnungen versehen, in welche wenigstens ein Kühlrohr mündet und die Eintrittskammern und Austrittskammern sind ferner fluidleitend mit einem Eintrittsrohr oder einem Austrittsrohr verbunden. Die Umlenkkammern können auch als U-förmige Kühlrohre ausgebildet sein.

Zweckmäßig sind beide Sammelrohre an nur einem Endbereich der Kühlrohre oder je ein Sammelrohr an zwei gegenüberliegenden Endbereichen der Kühlrohre angeordnet.

In einer weiteren Ausführungsform sind die Kühlrohre als Flachrohre ausgebildet und/oder zwischen den Kühlrohren sind Wellrippen angeordnet.

Insbesondere umfasst die Kraftfahrzeugklimaanlage einen Verdampfer als Wärmeübertrager zum Kühlen der dem Fahrzeuginnenraum zuzuführenden Luft als zusätzliches Bauteil zu dem Kältemittelkondensator und/oder die Kraftfahrzeugklimaanlage umfasst wenigstens eine Luftleiteinrichtung, z. B. eine Luftklappe oder ein Rollband, zur Steuerung der durch den wenigstens einen Luftkanal leitbaren Luftmenge. Zusätzlich kann die Kraftfahrzeugklimaanlage ergänzend eine elektrische Heizeinrichtung, insbesondere PTC-Heizeinrichtung, zum Erwärmen der dem Fahrzeuginnenraum zuzuführenden Luft besitzen. Die ergänzende elektrische Heizeinrichtung wird beispielsweise dann eingesetzt, wenn aufgrund sehr niedriger Außentemperaturen, z. B. <-15°C, der Betrieb des Kältekreises im Wärmepumpenbetrieb eine nicht ausreichende Wärmemenge zum Erwärmen der dem Fahrzeuginnenraum zuzuführenden Luft zur Verfügung stellt oder nicht betrieben werden kann.

In einer weiteren Ausgestaltung besteht der Kältemittelkondensator wenigstens teilweise, insbesondere vollständig, aus Metall, z. B. Stahl oder Aluminium. Vorzugsweise werden dabei die Komponenten des Kältemittelkondensators mittels Löten in einem Lötofen miteinander verbunden, wobei einzelne Bauteile des Kältemittelkondensators eine Lotplattierung oder Lotbeschichtung besitzen.

Zweckmäßig umfasst der Kältekreis im Wärmepumpenbetrieb einen Verdichter und einen Kältemittelverdampfer, wobei vorzugsweise der Kältemittelverdampfer im Wärmepumpenbetrieb das gleiche Bauteil ist wie der Kältemittelkondensator im Kältebetrieb.

In einer weiteren Ausgestaltung umfasst der Kältekreis einen Sammelbehälter und/oder einen Trockner und/oder einen Filter.

Vorzugsweise sind im Sammelbehälter der Trockner und/oder der Filter angeordnet.

Im Nachfolgenden wird ein Ausführungsbeispiel der Erfindung unter Bezugnahme auf die beigefügten Zeichnungen näher beschrieben. Es zeigt:
- Fig. 1: eine perspektivische Ansicht eines Teils eines Kältemittelkondensators,
- Fig. 2: eine erste obere perspektivische Teilansicht des Kältemittelkondensators gemäß Fig. 1,
- Fig. 3: eine zweite obere perspektivische Teilansicht des Kältemittelkondensators gemäß Fig. 1 und
- Fig. 4: eine dritte untere perspektivische Teilansicht des Kältemittelkondensators gemäß Fig. 1.

Eine nicht dargestellte Kraftfahrzeugklimaanlage wird in einem Kraftfahrzeug eingesetzt, um die dem Fahrzeuginnenraum zuzuführende Luft zu erwärmen und/oder zu kühlen. Ein ein- oder mehrteiliges Gehäuse aus, vorzugsweise thermoplastischen, Kunststoff weist eine Lufteinlassöffnung zum Einleiten von Luft aus der Umgebung des Kraftfahrzeuges und eine Lufteinlassöffnung zum Einleiten von Luft aus dem Innenraum des Kraftfahrzeuges im Umluftbetrieb auf. Mittels einer Umluftklappe kann gesteuert und/oder geregelt werden, ob von einem Gebläse der Kraftfahrzeugklimaanlage die Luft aus der Umgebung des Kraftfahrzeuges und/oder aus dem Fahrzeuginnenraum ansaugbar ist. Das Gehäuse der Kraftfahrzeugklimaanlage begrenzt Luftkanäle zum Durchleiten von Luft. Innerhalb des Luftkanales ist ein Luftfilter zum Reinigen der Luft angeordnet. Ferner ist innerhalb des Gehäuses in dem Luftkanal ein nicht dargestellter Kältemittelverdampfer zum Kühlen der dem Fahrzeuginnenraum zuzuführenden Luft angeordnet. Die Kraftfahrzeugklimaanlage weist einen Kältekreis mit einem Verdichter und Kältemittelleitungen auf. Im Kühlbetrieb der Kraftfahrzeugklimaanlage wird mit dem Kältemittelverdampfer innerhalb des Gehäuses die Luft gekühlt und mit Hilfe eines Kältemittelkondensators die an dem Kältemittelverdampfer aufgenommene Wärme in die Umgebungsluft abgegeben. Ferner ist innerhalb des Gehäuses ein Kältemittelkondensator als Teil des Kältekreises im Wärmepumpenbetrieb angeordnet zur Erwärmung der dem Fahrzeuginnenraum zuzuführenden Luft. Dabei stellt der Kältemittelkondensator zum Erwärmen der dem Fahrzeuginnenraum zuzuführenden Luft ein anderes Bauteil dar als der Kältemittelverdampfer innerhalb des Gehäuses zum Kühlen der Luft im Kältebetrieb. Der Kältekreis mit dem Verdichter kann somit einerseits im Wärmepumpenbetrieb zum Erwärmen der dem Fahrzeuginnenraum zuzuführenden Luft und im Kältebetrieb zum Kühlen der dem Fahrzeuginnenraum zuzuführenden Luft verwendet werden. Mittels nicht dargestellter Ventile kann das Kältemittel entsprechend umgeleitet werden.

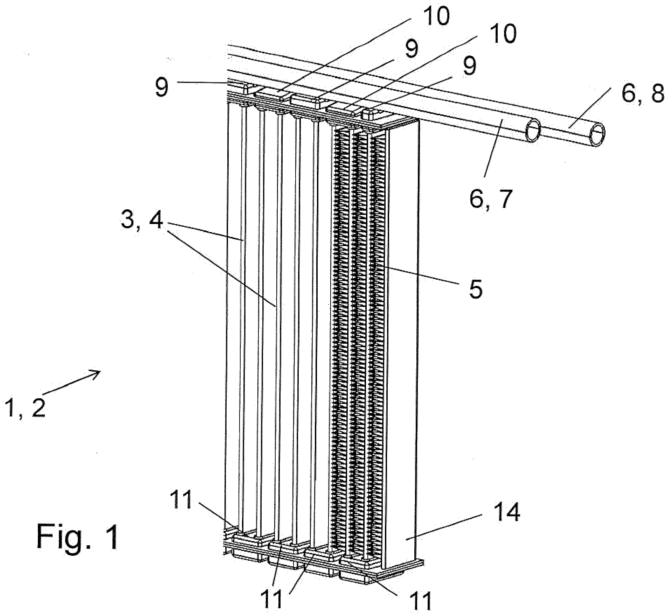

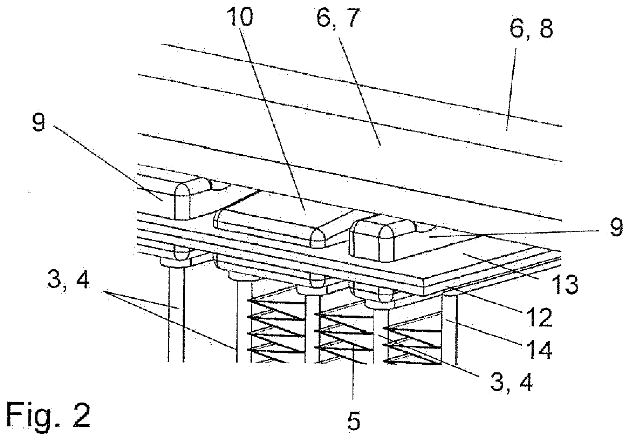

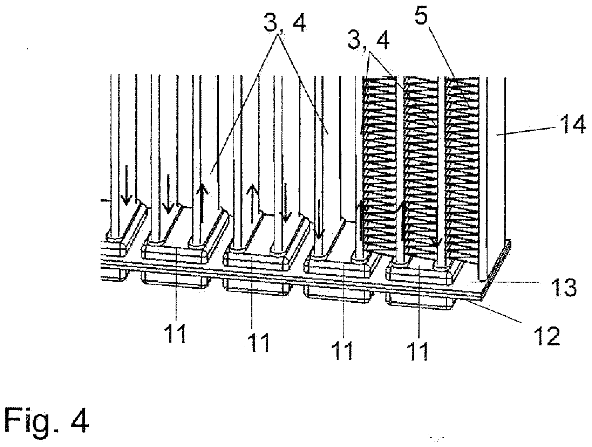

In den Fig. 1 bis 4 ist der Kältemittelkondensator 2 als Wärmeübertrager 1 zum Erwärmen der dem Fahrzeuginnenraum zuzuführenden Luft dargestellt. Eine Vielzahl von als Flachrohren 4 ausgebildeten Kühlrohren 3 sind geometrisch parallel zueinander einreihig angeordnet. Zwischen den Flachrohren 4 sind Wellrippen 5 angeordnet. An einem Endbereich der Flachrohre 4 sind zwei Sammelrohre 6 als Eintrittsrohr 7 und als Austrittsrohr 8 vorhanden (Fig. 1). An dem Endbereich der Flachrohre 4 sind Eintrittskammern 9 und Austrittskammern 10 vorhanden. Die Eintrittskammern 9 sind dabei fluidleitend mit dem Eintrittsrohr 7 verbunden und die Austrittskammern 10 sind fluidleitend mit dem Austrittsrohr 8 verbunden. Am anderen Endbereich der Flachrohre 4 sind Umlenkkammern 11 vorhanden (Fig. 1 und 4). Sowohl die Eintritts- und Austrittskammern 9, 10 als auch die Umlenkkammern 11 sind zwischen einem Bodenblech 12 und einem Deckelblech 13 ausgebildet. Dabei sind sowohl an dem Bodenblech 12 als auch an dem Deckelblech 13 Vertiefungen vorhanden, mittels denen die Eintritts- und Austrittskammern 9, 10 sowie die Umlenkkammern 11 gebildet werden. Die Ein- und Austrittskammern 9, 10 sowie Umlenkkammern 11 weisen schlitzförmige Öffnungen auf, in denen die Flachrohre 4 fluiddicht angeordnet sind.

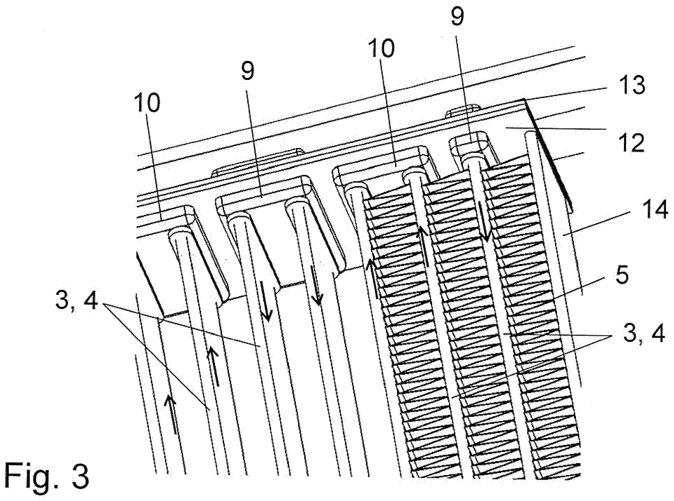

Die Strömungsrichtung des Kältemittels durch die Flachrohre 4 ist in den Fig. 3 und 4 mit Pfeilen dargestellt. Am äußersten rechten Ende ist der Kältemittelkondensator 2 von einem Seitenblech 14 begrenzt und das Seitenblech 14 tritt auch am äußersten linken Ende des Wärmeübertragers 1 auf (nicht dargestellt). Bei dem in Fig. 3 und 4 dargestellten äußersten rechten Flachrohr 4 strömt das Kältemittel von oben nach unten. Nach dem Durchströmen des Kältemittels durch das äußerste rechte Flachrohr 4 gemäß der Darstellung in Fig. 3 und 4 wird das Kältemittel an der äußersten rechten Umlenkkammer 11 umgeleitet und strömt durch das zweite Flachrohr 4 von rechts nach oben in die erste Austrittskammer 10 von rechts und anschließend in das Austrittsrohr 8. In das vierte und fünfte Flachrohr 4 von rechts strömt durch die zweite Eintrittskammer 9 von rechts Kältemittel ein. Das durch das vierte Flachrohr 4 von rechts geleitete Kältemittel wird an der zweiten Umlenkkammer 11 von rechts umgeleitet und in das dritte Flachrohr 4 von rechts eingeleitet und strömt anschließend nach oben zu der ersten Austrittskammer 10 oben von rechts. Das durch das fünfte Flachrohr 4 von rechts geleitete Kältemittel wird in die dritte Umlenkkammer 11 von rechts eingeleitet und durch das sechste Flachrohr 4 von rechts nach oben geleitet. Dieser fluidleitende Aufbau der Flachrohre 4 wiederholt sich entsprechend, so dass von rechts betrachtet zunächst ein Flachrohr 4 auftritt, welches von oben nach unten durchströmt ist, anschließend jeweils zwei Flachrohre auftreten, die von unten nach oben und darauffolgend wiederum zwei Flachrohre 4 auftreten, welche von oben nach unten durchströmt sind. Somit sind an dem Wärmeübertrager 1 als Kältemittelkondensator 2 die Kühlrohre 3 bzw. Flachrohre 4 nebeneinander angeordnet und abwechselnd sind jeweils zwei Kühlrohre 3 in einer ersten Richtung durchströmt und zwei weitere Kühlrohre 3 in einer zweiten Richtung durchströmt, wobei die erste und zweite Richtung entgegengesetzt gerichtet ist.

Dabei sind im Wesentlichen die Hälfte der Flachrohre 4 parallel von Kältemittel durchströmt, weil durch eine erste Hälfte an Flachrohren 4 das Kältemittel unmittelbar aus der Eintrittskammer 9 bzw. dem Eintrittsrohr 7 in die Flachrohre 4 einströmt und dieses Kältemittel nach dem Durchleiten durch die erste Hälfte der Flachrohre 4 in Umlenkkammern 11 umlenkgeleitet wird und anschließend durch die zweite Hälfte der Flachrohre 4 geleitet wird. Die zweite Hälfte der Flachrohre 4 ist somit in Reihe zu der ersten Hälfte der Flachrohre 4 fluidleitend geschaltet. Aufgrund dieser fluidleitend parallelen Schaltung der Kühlrohre 3 bzw. Flachrohre 4 kann somit eine im Wesentlichen homogene Temperaturverteilung des Kältemittelkondensators 2 erreicht und damit auch eine im Wesentlichen konstante Temperaturverteilung der aus dem Kältemittelkondensator 2 austretenden Luft erzielt werden. Vorzugsweise ist dabei der Kältemittelkondensator 2 bezüglich der Darstellung in Fig. 1 auf dem Kopf stehend innerhalb des Gehäuses der Kraftfahrzeugklimaanlage angeordnet, d. h. der Endbereich der Kühlrohre 4 mit den beiden Sammelrohren 6 ist unten und der andere Endbereich der Flachrohre 4 mit den Umlenkkammern 11 ist oben angeordnet. Das Kältemittel strömt durch das Eintrittsrohr 7 mit einer höheren Temperatur ein als es durch das Austrittsrohr 8 ausströmt und somit weisen die Flachrohre 4 im Anfangsbereich der Strömung, welche mit dem Kältemittel aus den Eintrittskammern 9 beaufschlagt werden, zunächst eine höhere Temperatur auf, so dass bei einer derartigen Ausrichtung des Kältemittelkondensators 2 im unteren Bereich eine sehr geringfügig höhere Temperatur im Durchschnitt auftritt als im oberen Bereich. Eine derartige optimierte Temperaturverteilung ist jedoch gegebenenfalls innerhalb der Kraftfahrzeugklimaanlage gewünscht, weil Austrittsöffnungen am Gehäuse der Kraftfahrzeugklimaanlage, welche dazu dienen, die Luft beispielsweise dem Fußbereich des Kraftfahrzeuges zuzuführen, am Gehäuse der Kraftfahrzeugklimaanlage weiter unten angeordnet sind und somit durch diese Austrittsöffnung zur Zuführung der Luft zu dem Fußraum eine etwas höhere Temperatur erwünscht ist. Ferner weist das Gehäuse der Kraftfahrzeugklimaanlage eine Austrittsöffnung zur Zuführung der Luft zum Defrosten der Windschutzscheibe und eine Austrittsöffnung zur Zuführung der Luft in den Bereich der Armaturentafel auf.

Insgesamt betrachtet sind mit der erfindungsgemäßen Kraftfahrzeugklimaanlage wesentliche Vorteile verbunden. Der einreihige Kältemittelkondensator 2 zum Erwärmen der dem Fahrzeuginnenraum zuzuführenden Luft im Wärmepumpenbetrieb des Kältekreises ist aufgrund seiner einreihigen Ausbildung in der Herstellung besonders preiswert und aufgrund der fluidleitend parallel beaufschlagten Kühlrohre 3 mit Kältemittel tritt eine im Wesentlichen homogene Temperaturverteilung der aus dem Kältemittelkondensator 2 austretenden Luft innerhalb des Luftkanales mit dem Kältemittelkondensator 2 auf. Damit tritt an dem Luftkanal in Strömungsrichtung der Luft nach dem Kältemittelkondensator 2 bzw. an einer Austrittskammer der Kraftfahrzeugklimaanlage eine im Wesentlichen homogene Temperaturverteilung der Luft auf.

### Bezugszeichenliste

- 1: Wärmeübertrager
- 2: Kältemittelkondensator
- 3: Kühlrohr
- 4: Flachrohr
- 5: Wellrippe
- 6: Sammelrohr
- 7: Eintrittsrohr
- 8: Austrittsrohr
- 9: Eintrittskammer
- 10: Austrittskammer
- 11: Umlenkkammer
- 12: Bodenblech
- 13: Deckelblech
- 14: Seitenblech

## Patentansprüche

1. Kraftfahrzeugklimaanlage, umfassend
- ein Gehäuse,
- wenigstens einen Luftkanal zum Durchleiten von Luft,
- ein Gebläse,
- einen Wärmeübertrager (1) als Kältemittelkondensator (2) als Teil eines Kältekreises im Wärmepumpenbetrieb zur Erwärmung der dem Fahrzeuginnenraum zuzuleitenden Luft, der Kältemittelkondensator (2) umfassend,
- Kühlrohre (3) zum Durchleiten eines Kältemittels,
- zwei Sammelrohre (6) zum Fluidverbinden der Kühlrohre (3),
wobei der Kältemittelkondensator (2) als ein einreihiger Kältemittelkondensator (2) ausgebildet ist,
**dadurch gekennzeichnet, dass** bei den nebeneinander angeordneten Kühlrohren (3) abwechselnd zwei Kühlrohre (3) in einer ersten Richtung und zwei Kühlrohre (3) in einer zweiten Richtung durchströmbar sind, wobei die erste Richtung zu der zweiten Richtung entgegengesetzt gerichtet ist.

2. Kraftfahrzeugklimaanlage nach Anspruch 1, **dadurch gekennzeichnet, dass** die Kühlrohre (3) im Wesentlichen geometrisch parallel zueinander ausgerichtet sind.

3. Kraftfahrzeugklimaanlage nach einem oder mehreren der vorhergehenden Ansprüche, **dadurch gekennzeichnet, dass** der Kältemittelkondensator (2) Umlenkkammern (11) zum Leiten des Kältemittels von einem Kühlrohr (3) in ein anderes Kühlrohr (3) umfasst und/oder der Kältemittelkondensator (2) Eintrittskammern (9) zum Einleiten des Kältemittels von einem Sammelrohr (6) als Eintrittsrohr (7) in wenigstens ein Kühlrohr (3) oder wenigstens zwei Kühlrohre (3) umfasst und/oder
der Kältemittelkondensator (2) Austrittskammern (10) zum Ausleiten des Kältemittels in ein Sammelrohr (6) als Austrittsrohr (8) aus wenigstens einem Kühlrohr (3) oder wenigstens zwei Kühlrohren (3) umfasst.

4. Kraftfahrzeugklimaanlage nach einem oder mehreren der vorhergehenden Ansprüche, **dadurch gekennzeichnet, dass** beide Sammelrohre (6) an nur einem Endbereich der Kühlrohre (3) oder je ein Sammelrohr (6) an zwei gegenüberliedenden Endbereichen der Kühlrohre (3) angeordnet sind.

5. Kraftfahrzeugklimaanlage nach einem oder mehreren der vorhergehenden Ansprüche, **dadurch gekennzeichnet, dass** die Kühlrohre (3) als Flachrohre (4) ausgebildet sind und/oder
zwischen den Kühlrohren (3) Wellrippen (5) angeordnet sind.

6. Kraftfahrzeugklimaanlage nach einem oder mehreren der vorhergehenden Ansprüche, **dadurch gekennzeichnet, dass** die Kraftfahrzeugklimaanlage einen Verdampfer als Wärmeübertrager zum Kühlen der dem Fahrzeuginnenraum zuzuführenden Luft umfasst als zusätzliches Bauteil zu dem Kältemittelkondensator (2) und/oder
die Kraftfahrzeugklimaanlage wenigstens eine Luftleiteinrichtung, z. B. eine Luftklappe oder ein Rollband, zur Steuerung der durch den wenigstens einen Luftkanal leitbaren Luftmenge umfasst und/oder
die Kraftfahrzeugklimaanlage ergänzend eine elektrische Widerstandsheizeinrichtung, insbesondere PTC-Heizeinrichtung, zum Erwärmen der dem Fahrzeuginnenraum zuzuführenden Luft umfasst.

7. Kraftfahrzeugklimaanlage nach einem oder mehreren der vorhergehenden Ansprüche, **dadurch gekennzeichnet, dass** der Kältemittelkondensator (2) wenigstens teilweise, insbesondere vollständig, aus Metall, z. B. Stahl oder Aluminium, besteht.

## Claims

1. A vehicle air-conditioning system, comprising
- a housing,
- at least one air channel for conducting air therethrough,
- a fan,
- a heat exchanger (1) as a refrigerant condenser (2) as part of a refrigeration circuit during heat pump operation for heating the air to be supplied to the vehicle interior, wherein the refrigerant condenser (2) comprises
- cooling tubes (3) for conducting a refrigerant therethrough,
- two collecting tubes (6) for fluidly connecting the cooling tubes (3),
wherein the refrigerant condenser (2) is designed as a single-row refrigerant condenser (2), **characterised in that** regarding the cooling tubes (3) arranged adjacent to one another, two cooling tubes (3) in a first direction and two cooling tubes (3) in a second direction can be alternately flowed through, wherein the first direction is directed opposite to the second direction.

2. The vehicle air-conditioning system according to claim 1, **characterised in that** the cooling tubes (3) are oriented substantially geometrically parallel to one another.

3. The vehicle air-conditioning system according to one or more of the preceding claims, **characterised in that** the refrigerant condenser (2) comprises deflection chambers (11) for guiding the refrigerant from one cooling tube (3) into another cooling tube (3), and/or the refrigerant condenser (2) comprises inlet chambers (9) for introducing the refrigerant from one collecting tube (6) as an inlet tube (7) into at least one cooling tube (3) or at least two cooling tubes (3), and/or
the refrigerant condenser (2) comprises outlet chambers (10) for discharging the refrigerant into a collecting tube (6) as an outlet tube (8) from at least one cooling tube (3) or at least two cooling tubes (3).

4. The vehicle air-conditioning system according to one or more of the preceding claims, **characterised in that** both collecting tubes (6) are arranged in only one end region of the cooling tubes (3) or one cooling tube (6) each is arranged in two opposite end regions of the cooling tubes (3).

5. The vehicle air-conditioning system according to one or more of the preceding claims, **characterised in that** the cooling tubes (3) are designed as flat tubes (4),
and/or
corrugated ribs (5) are arranged between the cooling tubes (3).

6. The vehicle air-conditioning system according to one or more of the preceding claims, **characterised in that** the vehicle air-conditioning system comprises an evaporator as a heat exchanger for cooling the air to be supplied to the vehicle interior as an additional component of the refrigerant condenser (2),
and/or
the vehicle air-conditioning system comprises at least an air guiding arrangement, e.g. an air flap or a roller belt, for controlling the amount of air guidable through the at least one air channel, and/or
the vehicle air-conditioning system additionally comprises an electric resistance heater, in particular a PTC heater, for heating the air to be supplied to the vehicle interior.

7. The vehicle air-conditioning system according to one or more of the preceding claims, **characterised in that** the refrigerant condenser (2) consists at least partially, in particular completely, of metal, e.g. steel or aluminium.

## Revendications

1. Système de climatisation d'un véhicule automobile, ledit système comprenant :
- un carter,
- au moins un conduit d'air servant à la circulation d'air,
- un pulseur,
- un échangeur de chaleur (1) utilisé comme condenseur de fluide frigorigène (2) et faisant partie d'un circuit de réfrigération dans le fonctionnement de la pompe à chaleur, ledit échangeur de chaleur servant au chauffage de l'air à fournir à l'habitacle du véhicule, ledit condenseur de fluide frigorigène (2) comprenant :
- des tubes de refroidissement (3) servant à la circulation d'un fluide frigorigène,
- deux tubes collecteurs (6) servant à la communication fluidique des tubes de refroidissement (3),
où le condenseur de fluide frigorigène (2) est conçu comme un condenseur de fluide frigorigène (2) à rangée unique, **caractérisé en ce que**, dans le cas des tubes de refroidissement (3) disposés les uns à côté des autres, deux tubes de refroidissement (3) sont traversés de manière alternée dans une première direction et deux tubes de refroidissement (3) sont traversés dans une seconde direction, où la première direction est orientée en sens opposé par rapport à la seconde direction.

2. Système de climatisation d'un véhicule automobile selon la revendication 1, **caractérisé en ce que** les tubes de refroidissement (3) sont orientés pratiquement en étant géométriquement parallèles les uns aux autres.

3. Système de climatisation d'un véhicule automobile selon l'une ou plusieurs des revendications précédentes, **caractérisé en ce que** le condenseur de fluide frigorigène (2) comprend des chambres de retour de flux (11) servant à faire passer le fluide frigorigène provenant d'un tube de refroidissement (3) dans un autre tube de refroidissement (3) et / ou **en ce que** le condenseur de fluide frigorigène (2) comprend des chambres d'entrée (9) servant à faire entrer le fluide frigorigène provenant d'un tube collecteur (6) servant de tube d'entrée (7), dans au moins un tube de refroidissement (3) ou dans au moins deux tubes de refroidissement (3), et / ou
**en ce que** le condenseur de fluide frigorigène (2) comprend des chambres de sortie (10) servant à évacuer le fluide frigorigène se trouvant dans un tube collecteur (6) servant de tube de sortie (8), par au moins un tube de refroidissement (3) ou par au moins deux tubes de refroidissement (3).

4. Système de climatisation d'un véhicule automobile selon l'une quelconque ou plusieurs des revendications précédentes, **caractérisé en ce que** les deux tubes collecteurs (6) sont disposés seulement au niveau d'une zone d'extrémité des tubes de refroidissement (3), ou bien un tube collecteur (6) est disposé à chaque fois au niveau de deux zones d'extrémités opposées des tubes de refroidissement (3).

5. Système de climatisation d'un véhicule automobile selon l'une quelconque ou plusieurs des revendications précédentes, **caractérisé en ce que** les tubes de refroidissement (3) sont configurés comme des tubes plats (4)
et / ou
**en ce que** des ailettes ondulées (5) sont disposées entre les tubes de refroidissement (3).

6. Système de climatisation d'un véhicule automobile selon l'une quelconque ou plusieurs des revendications précédentes, **caractérisé en ce que** le système de climatisation du véhicule automobile comprend un évaporateur utilisé comme échangeur de chaleur et servant au refroidissement de l'air à fournir à l'habitacle du véhicule, ledit évaporateur servant de composant supplémentaire du condenseur de fluide frigorigène (2)
et / ou
**en ce que** le système de climatisation du véhicule automobile comprend au moins un dispositif déflecteur d'air, par exemple un volet d'air ou une bande enroulée, servant à la régulation du débit d'air pouvant être guidé à travers le conduit d'air au moins au nombre de un
et / ou
**en ce que** le système de climatisation du véhicule automobile comprend, en complément, un dispositif de chauffage à résistance électrique, en particulier un dispositif de chauffage CTP, servant au chauffage de l'air à fournir à l'habitacle du véhicule.

7. Système de climatisation d'un véhicule automobile selon l'une quelconque ou plusieurs des revendications précédentes, **caractérisé en ce que** le condenseur de fluide frigorigène (2) se compose au moins en partie, en particulier en totalité, de métal, se composant par exemple d'acier ou d'aluminium.
